# EUROPEAN PATENT APPLICATION

(11) **EP 4 744 812 A1**
(43) Date of publication of application: **20.05.2026**
(21) Application number: 25215398.6
(22) Date of filing: 12.11.2025
(51) Int. Cl.: B23K 26/0622, B23K 26/06, B23K 26/352, B23K 26/362

(54) **LASER WELDING METHOD**

(30) Priority: 15.11.2024 IT 202400025872
(71) Applicant: Orotig S.p.A., 37014 Castelnuovo del Garda (VR) (IT)
(72) Inventor: Aprili, Silvano, 37014 Castelnuovo del Garda (VR) (IT); Segalla, Gabriel, 37014 Castelnuovo del Garda (VR) (IT); Romanelli, Tommaso, 37014 Castelnuovo del Garda (VR) (IT)
(74) Representative: Citron, Massimiliano

(57) **Abstract**

A software-implemented method is described for controlling the welding laser of a welding machine comprising:
- a laser source for generating a laser beam with adjustable spot and engraving the surface of an object;
- a power stage for driving the laser source;
- a control circuit for controlling the power stage and setting laser parameters during the laser action;
the method comprising the steps of:
1) acquiring a first value that expresses a selection relating to the type of material to be worked with the laser;
2) acquiring a second value that expresses a selection relating to the size of the spot generated by the laser beam on the object;
3) calculating a power value of the laser pulse emitted by the laser source as a function of the first and second value;
4) calculating a duration value of the laser pulse emitted by the laser source as a function of the first and second value;
5) generating control signals for the control circuit to set the laser power to the power value calculated in step 3) and the laser pulse duration to the duration value calculated in step 4);
6) sending the generated control signals to the control circuit.

## Description

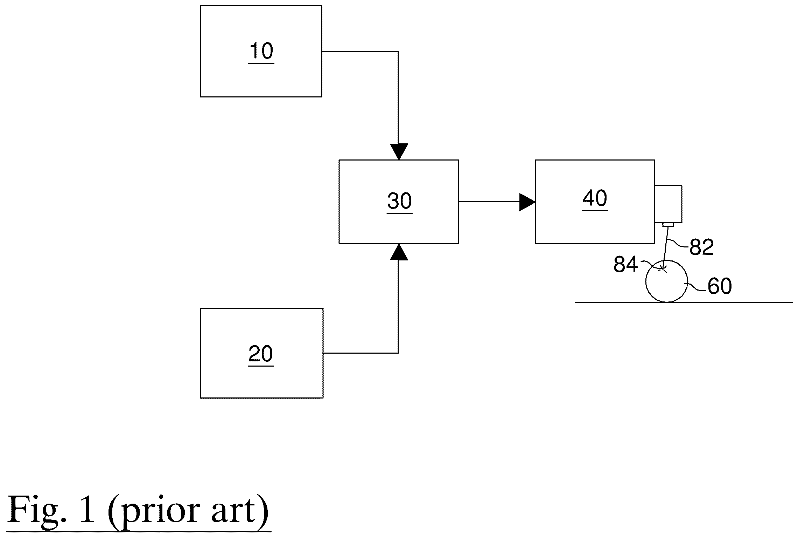

The invention relates to a laser welding method, e.g. for jewelry, to the method implemented via firmware\software in a laser welding machine, and to a laser welding machine that implements the method.
laser welding devices are known (see fig. 1) which generally comprise an electronic circuit of Human-Machine interface 10 and/or Machine-Machine interface 20, a laser source 40 and a control system 30 for the laser source 40. These devices are capable of welding parts of an object 60 by focusing a laser beam 82, generated by the laser source 40, onto the surface of the object 60.

When processing the same object 60, it is often necessary to adjust the laser spot 84 on the fly. For example, one starts with a small spot for the wire feed, and then moves on to polishing by increasing the spot diameter.

To maintain a constant energy density on the surface of the object 60 as the spot widens, it is necessary to adjust the parameters of the laser source 40. Setting such parameters according to the type of processing and material requires considerable experience, and a less experienced operator could make errors that risk compromising the quality of the product.

The main object of the invention is to improve this state of the art.

Another object is to make the use of a laser welding machine easier and faster.

Another object is the automatic setting of the laser parameters in a laser welding machine, so that they are more suitable or adapted to the type of metal and processing to be carried out.

At least one object is achieved by what is defined in the attached claims, where the dependent ones define advantageous variants of the invention.

The invention relates to a software-implemented method for controlling the welding laser of a welding machine which comprises:
- a laser source to generate a laser beam with an adjustable spot (a point generated by the laser beam on the object) and engrave the surface of an object;
- a power stage to drive the laser source;
- a control circuit to control the power stage and set parameters of the laser during the laser action;
the method comprising the steps of:
1) acquiring a first value that expresses a selection relating to the type of material to be worked with the laser;
2) acquiring a second value that expresses a selection relating to the size of the spot;
3) calculating a power value of the laser pulse emitted by the laser source as a function of the first and second values;
4) calculating a duration value of the laser pulse emitted by the laser source as a function of the first and second values;
5) generating control signals for the control circuit in order to set the laser power to the power value calculated in step 3) and the laser pulse duration to the duration value calculated in step 4);
6) sending the control signals generated in step 5) to the control circuit.

The method of the invention is based on an automatic correspondence between a pair of parameters, the diameter of the laser spot and the type of metal, and the power and duration parameters of the laser pulse emitted by the laser source 40.

By the method the laser pulse energy is automatically updated when the spot diameter or selected metal type is changed. This way, switching between different spot sizes, for example from 0.1 mm to 1.5 mm, occurs automatically, allowing for significant time savings (up to 5-6 times compared to the traditional method, where parameters are adjusted manually).

Furthermore, the method reduces the risk of error, especially for less experienced operators, who could set excessive energy values with the risk of damaging the artifacts.

Operationally, for a user it is enough to select the type of metal to be processed, and the power and pulse duration parameters of the laser are automatically adjusted based on the selected spot size. This, for example, allows switching from welding (laser spot from 0.2 mm to 0.4 mm) to polishing (laser spot from 1.0 mm to 1.5 mm) without having to manually set again the laser parameters, improving both the quality and speed of work.

Preferably, step 1) is performed by reading an output data from a human-machine interface circuit or by receiving data from a remote transmitter via a data line.

Preferably, step 2) is performed by reading an output data from a human-machine interface circuit or by receiving data from a remote transmitter via a data line.

Preferably, after step 1) the first value is saved in a memory and the memory is read to obtain a value to be used later as the first value during the execution of steps 3 and 4. In this way, for example, the operator is prevented from re-entering the same selection. That is, to recalculate the laser parameters steps 2) to 6) are performed, skipping step 1) and using the previously acquired value as the first value in the new steps 2) to 6).

To save operations, preferably the method has the additional step 7) of
executing a first cycle comprising steps 1÷4, in particular steps 1÷6, and
executing a second cycle comprising steps 2÷4, in particular steps 2÷6, where in the calculation performed in steps 3) and 4) the first value as obtained and used in the first cycle is re-utilized.

In the second cycle only the second value changes, e.g. following a re-selection of the user or generally by a repetition of step 2). This way, there is no need to set again the second value when only the first value is changed on the fly.

In particular, the method comprises the step of acquiring a command to enable or disable step 7), for maximum flexibility.

In particular, the method comprises the step of emitting an signal indicative that step 7) is enabled or disabled, so that the operator is aware of that.

Preferably the method comprises the step of accessing a database and performing an indexed search therein using the first and second values to find the results for the calculation performed in steps 3) and 4), respectively.

Preferably the method comprises the further step of performing a first cycle comprising steps 1-6, and
performing a second cycle comprising steps 2-6 where in the calculation performed in steps 3) and 4) the first value as obtained and used in the first cycle is re-utilized.

In the second cycle, only the second value changes, e.g. following a re-selection of the user or generally by repeating step 2). This way, there is no need to set again the second value when only the first value is changed on the fly.

Preferably after step 1) the value of the first value is saved in a memory and the memory is read to obtain said first value to be used in the second cycle.

Preferably, e.g. during step 1), a selection menu for the type of material to be processed with the laser is displayed on a graphical interface of the welding machine's.

Preferably, e.g. during step 2), a selection menu for the laser spot size is displayed on a graphical interface of the welding machine.

Preferably, in particular after step 1), the method comprises the step of acquiring, in particular via a graphical interface on board the welding machine, a command (from the user or coming from remote), to enable or disable step 7). This makes the welding machine even more flexible.

More preferably the method comprises the step of emitting a signal indicative that step 7) is enabled or disabled, in particular by emitting a signal or displaying a symbol, in particular via a graphical interface on board the welding machine.

Another aspect of the invention relates to a laser welding machine comprising:
- a laser source to generate a laser beam with an adjustable spot and engrave the surface of an object;
- a power stage to drive the laser source;
- a control circuit to control the power stage and set parameters of the laser during the laser action;
- software means for performing at least steps 1) to 6) of the method.

Said means preferably are a microprocessor programmed with a software configured to perform at least steps 1) to 6) of the method, more preferably in combination with one or each of the optional steps defined above.

Preferably, the welding machine comprises a human-machine graphical interface circuit for acquiring via software a first value that expresses a selection relating to the type of material to be worked with the laser and/or a second value that expresses a selection relating to the size of a point generated by the laser beam on the object.

Preferably the welder comprises a memory for saving at least the first value, and preferably also the second value.

Preferably, the welding machine comprises a database accessible and searchable by the software to perform therein an indexed search by a first value, which expresses a selection relating to the type of material to be worked with the laser, and by a second value, which expresses a selection relating to the size of the spot generated by the laser beam on the object, and for finding in the database, as a function of the first and second values, a power value of the laser and a duration value of the laser pulse emitted by the laser source.

Preferably, the welding machine comprises a beam expander, which is passed through by the laser beam generated by the laser source and is configured to change the size of the spot. In particular, the beam expander internally comprises movable optics whose position determines the size of the spot. Preferably, the position of the optics is adjustable via a manual lever or a stepper motor.

In general the database may be remote or stored locally in a memory of the welding machine.

In particular, the database is a tabular data structure, which uniquely associates a pair of output values, i.e. the laser parameters for power and duration of the laser pulse, to two input values, i.e. the first and second values.

Preferably, said software is permanently resident on the welding machine, e.g. in a ROM.

Further advantages will become clear from the following description, which refers to an example of a preferred embodiment of a welding machine and its method of operation, wherein:
- Fig. 1 shows a block diagram of a well-known laser welding machine;
- Fig. 2 shows a block diagram of a laser welding machine.

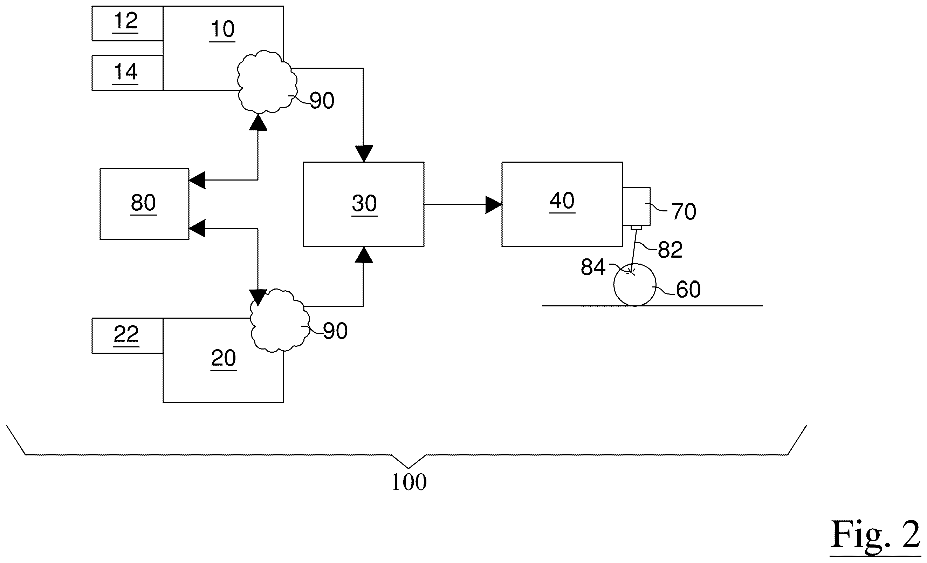

A welding machine 100 (see fig. 2) comprises:
- a Human-Machine Interface electronic circuit 10 and/or a Machine-Machine Interface electronic circuit 20,
- a laser source 40 and
- a control stage 30 for the laser source 40.

The electronic circuit 10 comprises:
means 12 for receiving a command from an operator, such as touch screens and/or buttons (including rotary buttons), encoders, potentiometer levers, or digital or analog foot switches; and preferably also
means 14 for displaying information to the operator, such as displays of various technologies (alphanumeric, graphic, OLED or TFT), with or without touchscreen.

The electronic circuit 20 functions to connect the welding machine 100 with other remote devices in master or slave mode. Via the electronic circuit 20, which may comprise means 22 such as serial connections, USB, Ethernet, or wireless connections (e.g. WiFi, Bluetooth, etc.), the welding machine 100 can also be controlled remotely.

The circuits 10, 20, when present, allow for the acquisition of input data from an operator, or from a master remote device, to select the metal to be processed and set the diameter of the laser spot 84 emitted by the laser source 40.

The circuits 10, 20 are managed by a related software, for simplicity generically indicated with 90 for both, which for example runs on a microcontroller or microprocessor board of the respective circuit 10, 20.

The stage 30 is for example integrated into a microprocessor board, and is designed to manage the overall operation of the welding machine 100 and in particular of the laser source 40. The stage 30 may comprise one or more electronic control and power boards, as well as a series of actuators, sensors, stepper and DC motors, fans and pumps.

The laser source 40 may be made with different technologies (e.g. Nd-YAG, fiber laser, diode laser, etc.), and is responsible for generating a laser beam 82. The laser source 40 comprises a power stage composed, for example, of a CCPS (*Capacitor Charge Power Supply*) board for charging energy storage capacitors. The beam 82 is then focused into a welding chamber, where the object 60 is present, directly or via optical fiber, through a series of optical components, such as lenses, diaphragms, mirrors and prisms. Among the optical devices, an important role is played by a beam expander 70, which allows the diameter of the laser beam 82 (the laser spot 84) to be changed at the focal point. The diameter of the spot 84 can be adjusted by moving the optics within the expander 70, e.g. via a potentiometer manual lever or a stepper motor.

The power and duration parameters of the laser pulse must be adapted to the required processing and/or the type of object 60.

In the welding machine 100, as explained below, it is possible to modify the laser parameters based on the object 60 to be processed, on the material it is made of and the type of processing. In particular, it is possible to modify the size of the spot 84 and the energy of the laser beam. The size of the spot 84 is a parameter that varies depending on the type of processing (for example, 0.2-0.4 mm for microwire application, 0.4-0.6 mm for joining small parts, 0.5-0.7 mm for joining medium parts, and 0.8 mm and above for polishing). The required laser beam energy can vary significantly depending on the type of metal (based on its resistivity and, above all, its reflectivity).

### LASER PARAMETER SETTINGS

The software 90 can access a database 80 containing a list of laser parameters (power and duration of the beam) which is searchable based on the diameter of the spot 84 and the type of metal to be processed.

The operator or the master device selects the type of metal to be processed and the diameter of the spot 84, e.g. by setting the diameter of the spot 84 via a dedicated menu provided on an interface of the electronic circuit 10 or manually with the potentiometer lever. Or the selection of the type of metal and the diameter of the spot 84 comes from a remote master device via the electronic circuit 20.

The selection data is acquired by the software 90, which, based on the selected metal and the diameter of the spot 84, searches the database 80 for parameters of the laser pulse to be generated, such as power, duration and consequent energy.

The software 90 sends the parameters found in the database 80 to the control stage 30, which uses them to set the laser power stage. That is, the parameters processed by the software 90 via the database 80 are sent to the stage 30, which manages and regulates the laser source 40 based on these parameters.

After receiving the data from the software 90, the stage 30 then preferably awaits the firing command from the operator to activate the laser pulse. For example, the firing command is given via a foot switch, or by the master device via the circuit 20.

Once the command has been received, the stage 30 activates the laser source 40, generating a laser pulse 82 according to the parameters received from the software 90 (i.e. having a spot 84 of the selected size, and power and duration of the laser pulse as obtained from the database 80).

Preferably, the software 90 displays the parameters found in the database 80 on a display.

If the operator, or the master device, changes the diameter of the spot 84 on the fly or the type of metal, the software 90 accesses the database 80 again and automatically updates the power and laser pulse duration parameters in the stage 30 to adapt the welding machine 100 to the new settings. Therefore, the speed of use of the welding machine 100 increases significantly since all the human time required to reset the parameters is eliminated.

However, it is possible to manually modify each single parameter, even while keeping the consultation of the database 80 active. Alternatively, the consultation of the database 80 can be disabled, allowing settings which are independent of the metal type.

The active condition of the database 80 is preferably indicated visually and/or acoustically, allowing the operator immediate control.

## Claims

1. Software-implemented method for controlling the welding laser of a welding machine comprising:
- a laser source for generating a laser beam with adjustable spot and engraving the surface of an object;
- a power stage for driving the laser source;
- a control circuit for controlling the power stage and setting laser parameters during the laser action;
the method comprising the steps of:
1) acquiring a first value that expresses a selection relating to the type of material to be worked with the laser;
2) acquiring a second value that expresses a selection relating to the size of the spot generated by the laser beam on the object;
3) calculating a power value of the laser pulse emitted by the laser source as a function of the first and second value;
4) calculating a duration value of the laser pulse emitted by the laser source as a function of the first and second value;
5) generating control signals for the control circuit to set the laser power to the power value calculated in step 3) and the laser pulse duration to the duration value calculated in step 4);
6) sending the generated control signals to the control circuit.

2. Method according to claim 1, wherein step 1) is performed by reading an output data from a graphical human-machine interface circuit or by receiving a data from a remote transmitter via a data line.

3. Method according to claim 1 or 2, wherein step 2) is performed by reading an output data from a graphical human-machine interface circuit or by receiving a data from a remote transmitter via a data line.

4. Method according to any preceding claim, wherein
after step 1) the first value is saved in a memory, and
steps 2), 3) and 4) are re-executed without step 1) to update the laser parameters, wherein the memory is read to obtain a value to be used as the first value in place of the one obtained via step 1).

5. Method according to any preceding claim, comprising a further step 7) of
executing a first cycle comprising steps 1÷4, and
executing a second cycle comprising steps 2÷4 where in the calculation performed in steps 3) and 4) the first value as obtained in the first cycle is re-utilized.

6. Method according to claim 5, with the step of acquiring a command to enable or disable step 7).

7. Method according to claim 6, with the step of emitting a signal indicative that step 7) is enabled or disabled.

8. Method according to any preceding claim, comprising the step of accessing a database and performing an indexed search therein by the first and second values used as indexes to find the results for the calculation performed in step 3) and 4), respectively.

9. Laser welding machine comprising:
- a laser source for generating a laser beam with an adjustable spot and engraving the surface of an object;
- a power stage for driving the laser source;
- a control circuit for controlling the power stage and setting parameters of the laser during the action of the laser;
- software means for performing at least steps 1) to 6) of the method according to any preceding claim.

10. Laser welding machine according to claim 9, comprising a database accessible and searchable by software means
to perform an indexed search therein by a first value, which expresses a selection relating to the type of material to be worked with the laser, and by a second value, which expresses a selection relating to the size of the spot generated by the laser beam on the object, and
to find, as a function of the first and second values, a value of laser power and a value of duration of the laser pulse emitted by the laser source.
